# EUROPEAN PATENT APPLICATION

(11) **EP 4 266 799 A1**
(43) Date of publication of application: **25.10.2023**
(21) Application number: 20966024.0
(22) Date of filing: 18.12.2020
(51) Int. Cl.: H04W 72/12, H04W 28/04

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2020/047523
(87) International publication number: WO 2022/130638

(57) **Abstract**

A terminal according to an aspect of the present disclosure includes: a receiving section that receives one piece of downlink control information (DCI) for a plurality of uplink shared channels (Physical Uplink Shared Channels (PUSCHs)); and a control section that controls, based on at least one of a plurality of pieces of first information included in the DCI and each indicating a sounding reference signal resource indicator (SRI), transmissions of the plurality of PUSCHs using a plurality of SRIs or the plurality of PUSCHs using a single SRI. According to an aspect of the present disclosure, even when multi-TRP is used, PUSCH repetition transmissions can be appropriately controlled.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In 3GPP Rel. 15, repetition transmissions of a UL data channel (for example, an uplink shared channel (Physical Uplink Shared Channel (PUSCH)) are supported. A UE performs control so as to perform transmission of the PUSCH through a plurality of slots (for example, K consecutive slots) on the basis of a repetition factor K configured from a network (for example, a base station). In other words, when the repetition transmissions are performed, each PUSCH is transmitted in a different slot (for example, units of slots).

On the other hand, for Rel. 16 (or later versions), performing a plurality of PUSCH transmissions in 1 slot when performing repetition transmissions of a PUSCH is under study. In other words, transmission of each PUSCH is performed in units shorter than the slot (for example, units of sub-slots or units of mini-slots).

For Rel. 16 (or later versions), dynamic switching between a single PUSCH transmission and repetition transmissions of a PUSCH is under study.

For NR, communication using one or a plurality of transmission/reception points (TRPs) (multi-TRP) is under study.

However, for previous NR specifications, how to control repetition transmissions of PUSCHs in multi-panel/TRP has not been studied sufficiently. When repetition transmissions of PUSCHs in multi-TRP are not performed appropriately, throughput may decrease, and communication quality may degrade.

Thus, an object of the present disclosure is to provide a terminal, a radio communication method, and a base station that can appropriately control PUSCH repetition transmissions.

### Solution to Problem

A terminal according to an aspect of the present disclosure includes: a receiving section that receives one piece of downlink control information (DCI) for a plurality of uplink shared channels (Physical Uplink Shared Channels (PUSCHs)); and a control section that controls, based on at least one of a plurality of pieces of first information included in the DCI and each indicating a sounding reference signal resource indicator (SRI), transmissions of the plurality of PUSCHs using a plurality of SRIs or the plurality of PUSCHs using a single SRI.

### Advantageous Effects of Invention

According to an aspect of the present disclosure, even when multi-TRP is used, PUSCH repetition transmissions can be appropriately controlled.

### Brief Description of Drawings

[FIG. 1] FIGS. 1A and 1B are diagrams to show examples of repetition transmissions of a PUSCH.
[FIG. 2] FIGS. 2A and 2B are diagrams to show examples of an invalid symbol pattern.
[FIG. 3] FIGS. 3A and 3B are diagrams to show examples of nominal repetitions and actual repetitions.
[FIG. 4] FIG. 4 is a diagram to show an example of repetition transmissions of PUSCHs in multi-TRP.
[FIG. 5] FIGS. 5A to 5C are diagrams to show examples of a single PUSCH transmission, repetition transmissions of a PUSCH for a single TRP, and repetition transmissions of PUSCHs for a plurality of TRPs.
[FIG. 6] FIGS. 6A to 6C are diagrams to show examples of correspondence between a plurality of SRIs and a plurality of repetition transmissions.
[FIG. 7] FIGS. 7A and 7B are diagrams to show examples of repetition transmissions of a PUSCH(s) for a single and a plurality of TRPs according to Embodiment 2-1.
[FIG. 8] FIGS. 8A and 8B are diagrams to show examples of repetition transmissions of a PUSCH(s) for a single and a plurality of TRPs according to Embodiment 2-2.
[FIG. 9] FIG. 9 is a diagram to show an example of SRI fields defined in Rel. 16 (or previous versions).
[FIG. 10] FIG. 10 is a diagram to show an example of repetition transmissions of a PUSCH for a single TRP according to Embodiment 2-3.
[FIG. 11] FIG. 11 is a diagram to show an example of repetition transmissions of PUSCHs for a plurality of TRPs according to Embodiment 2-3.
[FIG. 12] FIG. 12 is a diagram to show an example of a relationship between a TPMI field and an SRI field according to a variation of a second embodiment.
[FIG. 13] FIG. 13 is a diagram to show an example of repetition transmissions of a PUSCH for a single TRP according to Variation 2-3.
[FIG. 14] FIG. 14 is a diagram to show an example of repetition transmissions of PUSCHs for a plurality of TRPs according to Embodiment 2-3.
[FIG. 15] FIG. 15 is a diagram to show an example of a single PUSCH transmission according to Embodiment 3-1.
[FIG. 16] FIG. 16 is a diagram to show an example of a single PUSCH transmission according to Embodiment 3-2.
[FIG. 17] FIG. 17 is a diagram to show an example of a single PUSCH transmission according to Embodiment 3-3.
[FIG. 18] FIG. 18 is a diagram to show an example of a single PUSCH transmission according to Embodiment 3-4.
[FIG. 19] FIG. 19 is a diagram to show an example of a schematic structure of a radio communication system according to one embodiment.
[FIG. 20] FIG. 20 is a diagram to show an example of a structure of a base station according to one embodiment.
[FIG. 21] FIG. 21 is a diagram to show an example of a structure of a user terminal according to one embodiment.
[FIG. 22] FIG. 22 is a diagram to show an example of a hardware structure of the base station and the user terminal according to one embodiment.

### Description of Embodiments

### (Repetition Transmissions)

In Rel. 15, repetition transmissions are supported in data transmission. For example, a base station (network (NW) or gNB) repetitively performs transmission of DL data (for example, a downlink shared channel (PDSCH)) a certain number of times. Alternatively, a UE repetitively performs transmission of UL data (for example, an uplink shared channel (PUSCH)) a certain number of times.

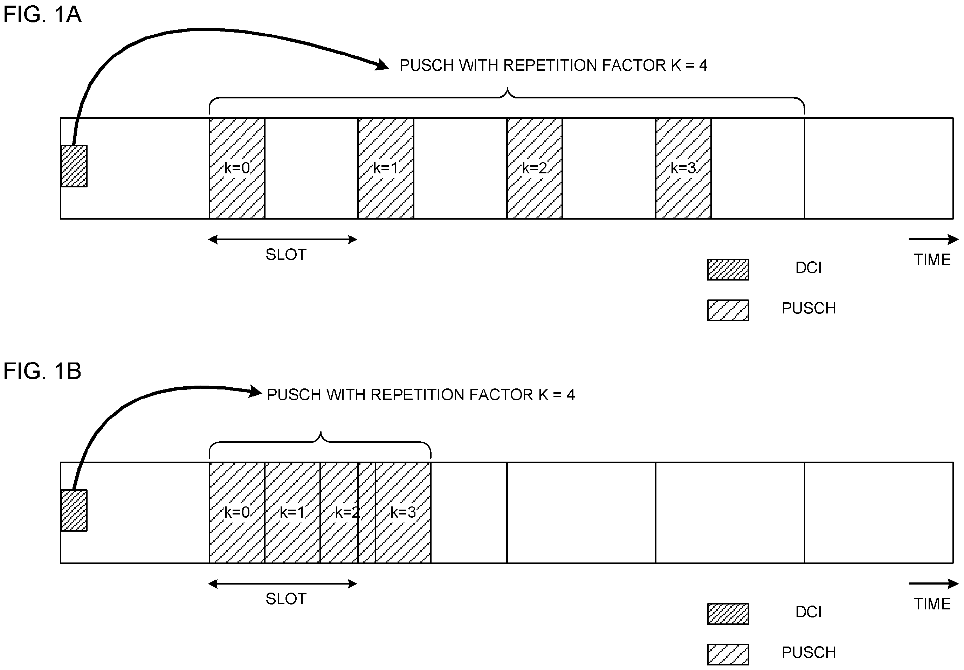

FIG. 1A is a diagram to show an example of repetition transmissions of a PUSCH. FIG. 1A shows an example in which the PUSCH with a certain number of repetitions is scheduled by a single piece of DCI. The number of the repetitions is also referred to as a repetition factor K or an aggregation factor K.

In FIG. 1A, the repetition factor K = 4, but a value of K is not limited to this. The n-th repetition is also referred to as an n-th transmission occasion or the like, and may be identified by a repetition index k (0 ≤ k ≤ K - 1). FIG. 1A shows repetition transmissions of a PUSCH (for example, a dynamic grant-based PUSCH) dynamically scheduled by the DCI, but the repetition transmissions may be applied to repetition transmissions of a configured grant-based PUSCH.

For example, in FIG. 1A, the UE semi-statically receives information (for example, aggregationFactorUL or aggregationFactorDL) indicating the repetition factor K by higher layer signaling. Here, for example, the higher layer signaling may be any one or combinations of RRC (Radio Resource Control) signaling, MAC (Medium Access Control) signaling, broadcast information, and the like.

For example, the MAC signaling may use MAC control elements (MAC CEs), MAC PDUs (Protocol Data Units), and the like. For example, the broadcast information may be master information blocks (MIBs), system information blocks (SIBs), minimum system information (RMSI (Remaining Minimum System Information)), and the like.

The UE controls PDSCH reception processing (for example, at least one of reception, demapping, demodulation, and decoding) or PUSCH transmission processing (for example, at least one of transmission, mapping, modulation, and coding) in K consecutive slots on the basis of at least one field value (or information indicated by the field value) below in the DCI:
- allocation of time domain resources (for example, a start symbol, the number of symbols in each slot, or the like),
- allocation of frequency domain resources (for example, a certain number of resource blocks (RBs) or a certain number of resource block groups (RBGs)),
- modulation and coding scheme (MCS) index,
- configuration of PUSCH demodulation reference signal (DMRS), and
- spatial relation information (spatial relation info) of a PUSCH or transmission configuration indication (TCI (Transmission Configuration Indication or Transmission Configuration Indicator)) state (TCI state (TCI-state)) .

Mapping of identical symbol may be applied between the K consecutive slots. FIG. 1A shows a case where a PUSCH in each slot is mapped to a certain number of symbols from the head of the slot. Mapping of the identical symbol between slots may be determined as described in the above-described time domain resource allocation.

For example, the UE may determine symbol mapping in each slot on the basis of a start symbol S and the number L of symbols (for example, Start and Length Indicator (SLIV)) determined on the basis of a value m of a certain field (for example, a TDRA field) in the DCI. Note that the UE may determine the first slot on the basis of K2 information determined on the basis of a value m of the certain field (for example, the TDRA field) of the DCI.

On the other hand, between the K consecutive slots, redundancy versions (RVs) applied to TBs based on identical data may be identical, or may be at least partially different from each other. For example, an RV applied to the TB in the n-th slot (transmission occasion or repetition) may be determined on the basis of a value of a certain field (for example, an RV field) in the DCI.

When resources assigned in the K consecutive slots have different communication directions in UL, DL, or flexible and at least one symbol of each slot designated by at least one of up/down link communication direction indication information for TDD control (for example, an RRC IE "TDD-UL-DL-ConfigCommon" or "TDD-UL-DL-ConfigDedicated") and a slot format identifier (Slot format indicator) of DCI (for example, DCI format 2_0), it may be assumed that resources of a slot including the symbol are not transmitted (or received).

In Rel. 15, as shown in FIG. 1A, a PUSCH is repetitively transmitted through a plurality of slots (in units of slots), but in Rel. 16 (or later versions), it is assumed that repetition transmissions of a PUSCH are performed in units shorter than the slot (for example, units of sub-slots, units of mini-slots, or units of a certain number of symbols) (see FIG. 1B).

In FIG. 1B, the repetition factor K = 4, but a value of K is not limited to this. The n-th repetition is also referred to as an n-th transmission occasion or the like, and may be identified by a repetition index k (0 ≤ k ≤ K - 1). FIG. 1B shows repetition transmissions of a PUSCH (for example, a dynamic grant-based PUSCH) dynamically scheduled by the DCI, but the repetition transmissions may be applied to repetition transmissions of a configured grant-based PUSCH.

The UE may determine symbol mapping of PUSCH transmission (for example, a PUSCH with k = 0) in a certain slot on the basis of the start symbol S and the number L of symbols (for example, StartSymbol and length) determined on the basis of the value m of a certain field (for example, the TDRA field) in the DCI of the PUSCH. Note that the UE may determine the certain slot on the basis of Ks information determined on the basis of the value m of the certain field (for example, the TDRA field) of the DCI.

The UE may dynamically receive information indicating the repetition factor K (for example, numberofrepetitions) by downlink control information. The repetition factor may be determined on the basis of the value m of the certain field (for example, the TDRA field) in the DCI. For example, a table defining a correspondence relationship of a bit value notified using DCI, the repetition factor K, the start symbol S, and the number L of symbols may be supported.

The slot-based repetition transmissions shown in FIG. 1A may be referred to as a repetition transmission type A (for example, PUSCH repetition Type A), and the sub-slot-based repetition transmissions shown in FIG. 1B may be referred to as a repetition transmission type B (for example, PUSCH repetition Type B).

The UE may be configured with application of at least one of the repetition transmission type A and the repetition transmission type B. For example, the UE may be notified, by a base station, of the repetition transmission type to be applied by the UE, by higher layer signaling (for example, PUSCHRepTypeIndicator).

The UE may be configured with either the repetition transmission type A or the repetition transmission type B for each DCI format for scheduling a PUSCH.

For example, when the repetition transmission type B (for example, PUSCH-RepTypeB) is configured by higher layer signaling (for example, PUSCHRepTypeIndicator-AorDCIFormat0_1) for a first DCI format (for example, DCI format 0_1), the UE applies the repetition transmission type B to PUSCH repetition transmissions scheduled by using the first DCI format. Otherwise (for example, when PUSCH-RepTypeB is not configured or when PUSCH-RepTypA is configured), the UE applies the repetition transmission type A to PUSCH repetition transmissions scheduled by using the first DCI format.

For Rel. 16 (or later versions), dynamically switching between a single PUSCH transmission and repetition transmissions of a PUSCH is under study.

When a higher layer parameter related to time domain allocation of a PUSCH (for example, pusch-TimeDomainAllocationListDCI-0-1-r16 or pusch-TimeDomainAllocationListDCI-0-2-rl6) is configured for the UE, the number of repetitions (for example, 1, 2, 3, 4, 7, 8, 12, or 16) may be configured by a parameter related to the number of repetitions of a PUSCH included in the higher layer parameter (for example, numberOfRepetitions-r16). The UE may judge the number of repetitions of a PUSCH scheduled by DCI on the basis of a time domain resource allocation field of the DCI. When the number of repetitions is configured/indicated to be one, the UE may perform a single PUSCH transmission.

### (Invalid Symbol Pattern)

It is also studied to notify, when the repetition transmission type B is applied to PUSCH transmission, the UE of information related to a symbol (or a symbol pattern) unavailable for the PUSCH transmission. The symbol pattern unavailable for the PUSCH transmission may be referred to as an invalid symbol pattern and the like.

Making notification of the invalid symbol pattern by using at least one of higher layer signaling and DCI is under study. The DCI may be in a certain DCI format (for example, at least one of DCI formats 0 1 and 0_2).

For example, the UE is notified of information related to the invalid symbol pattern unavailable for the PUSCH transmission by using a first higher layer parameter. The UE may be notified of whether the information related to the invalid symbol pattern is applied, by using the DCI. In this case, a bit field (a notification field for whether the invalid symbol pattern is applied) for indicating whether the information related to the invalid symbol pattern is applied may be configured for the DCI.

The UE may be notified of whether the notification field (or additional bits) in the DCI is configured, by using a second higher layer parameter. In other words, the UE may, when the UE is notified of the information related to the invalid symbol pattern by the first higher layer parameter, determine whether the information related to the invalid symbol pattern is applied, on the basis of the second higher layer parameter and the DCI.

When the first higher layer parameter is not notified or configured, the UE may control the PUSCH transmission without considering the invalid symbol pattern. When the first higher layer parameter is notified or configured, the UE may judge whether the invalid symbol pattern is applied, on the basis of the second higher layer parameter and the DCI. For example, when addition of additional bits (or a certain field) to indicate whether the invalid symbol pattern is applied for the DCI is indicated by the second higher layer parameter, the UE may judge whether the invalid symbol pattern is applied on the basis of the certain field.

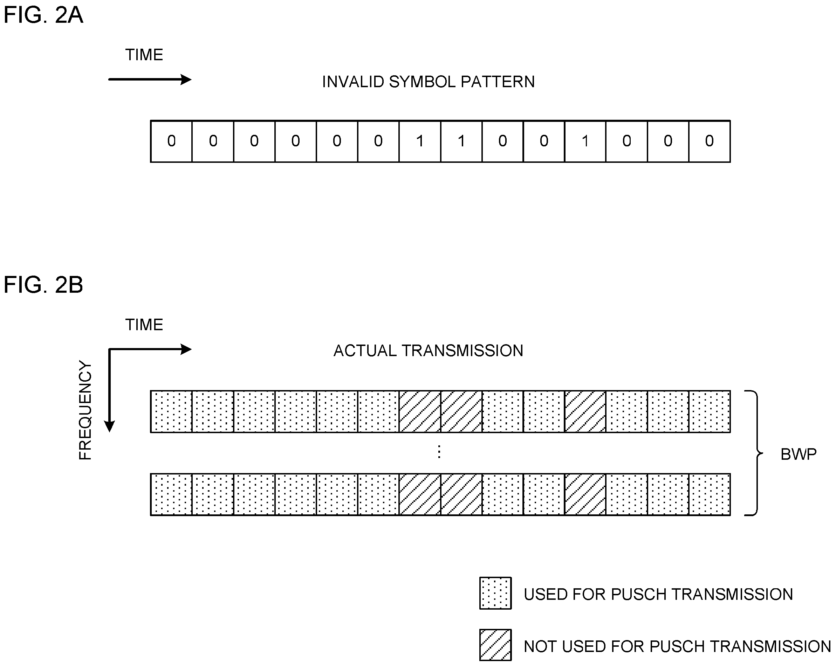

It is only necessary that the first higher layer parameter is information to notify a symbol pattern invalid for PUSCH transmission, and, for example, a bitmap form may be applied (see FIG. 2A). FIG. 2A is a diagram to show an example of a case where the invalid symbol pattern is defined by a bitmap (1-D bitmap) in relation to a time domain. The UE may judge, on the basis of information related to the invalid symbol pattern, resources available for the PUSCH transmission in one or more frequency bandwidths (for example, BWPs) (see FIG. 2B).

Here, a case where one or common invalid symbol pattern is applied to a plurality of BWPs is shown, but a different invalid symbol pattern may be configured or applied for each BWP.

### (Nominal repetitions / Actual repetitions)

When the repetition transmissions are performed in units of sub-slots with the application of the repetition transmission type B, a case where a certain repetition transmission crosses a slot boundary (slot-boundary) occurs depending on the repetition factor (K), a data allocation unit, and the like.

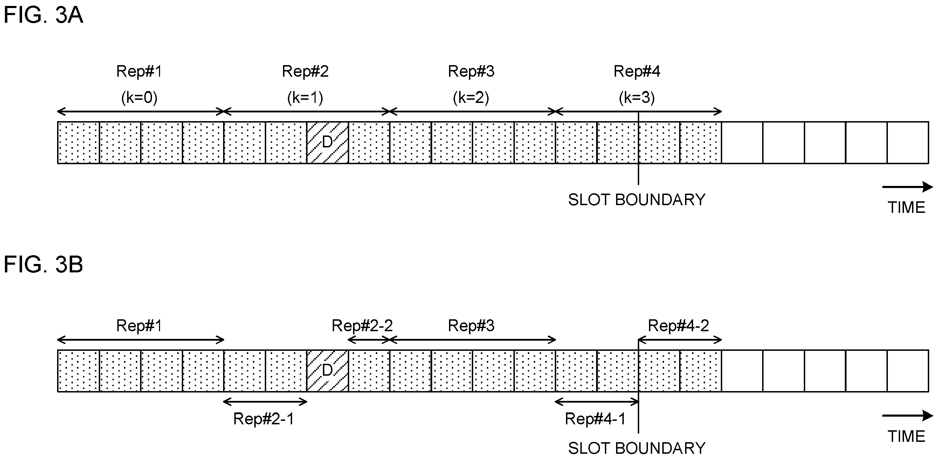

FIG. 3A shows an example of a case where the repetition transmission type B is applied when the repetition factor (K) is 4 and the PUSCH length (L) is 4. In FIG. 3A, a PUSCH with k = 3 is arranged across the slot boundary. In such a case, the PUSCH may be divided (or segmented) by the slot boundary as a reference for transmission (see FIG. 3B).

A case where a symbol (for example, a DL symbol, an invalid symbol, or the like) unavailable for PUSCH transmission is included in the slot is also assumed. FIG. 3A shows a case where a symbol unavailable for the PUSCH transmission (here, a DL symbol) is included in some symbols to which a PUSCH of k = 1 is mapped. In such a case, PUSCH transmission may be performed by using the symbols except the DL symbol (see FIG. 3B) .

When a DL symbol (or an invalid symbol) is included in symbols to which a certain PUSCH is mapped, except edge symbols, the PUSCH transmission may be performed by using the symbols other than the DL symbol part. In this case, the PUSCH may be divided (or segmented).

FIG. 3B shows a case where a PUSCH with k = 1 (Rep #2) is divided into two portions (Reps #2-1 and #2-2) by a DL symbol and a PUSCH with k = 3 (Rep #4) is divided into two portions (Reps #4-1 and #4-2) by a slot boundary in sub-slot-based repetition transmissions.

Note that repetition transmissions before taking account of the DL symbol, the invalid symbol, and the slot boundary (FIG. 3A) may be referred to as nominal repetitions. Repetition transmissions taking account of the DL symbol, the invalid symbol, and the slot boundary (FIG. 3B) may be referred to as actual repetitions.

### (Spatial Relations for SRS and PUSCH)

In Rel-15 NR, the UE may receive information to be used for transmission of a reference signal for measurement (for example, a sounding reference signal (SRS)) (SRS configuration information, for example, a parameter in an RRC control element "SRS-Config").

Specifically, the UE may receive at least one of information related to one or a plurality of SRS resource sets (SRS resource set information, for example, an RRC control element "SRS-ResourceSet") and information related to one or a plurality of SRS resources (SRS resource information, for example, an RRC control element "SRS-Resource").

One SRS resource set may be related to a certain number of SRS resources (may group the certain number of SRS resources). Each SRS resource may be specified by an SRS resource indicator (SRI) or an SRS resource ID (Identifier).

The SRS resource set information may include an SRS resource set ID (SRS-ResourceSetId), a list of SRS resource IDs (SRS-ResourceId) used in the resource set, an SRS resource type (for example, any of a periodic SRS, a semi-persistent SRS, and an aperiodic SRS) and the usage of the SRS.

Here, the SRS resource type may indicate any of a periodic SRS (P-SRS), a semi-persistent SRS (SP-SRS), and an aperiodic SRS (A-SRS). Note that the UE may periodically (or periodically after activation) transmit a P-SRS and an SP-SRS and transmit an A-SRS on the basis of an SRS request of DCI.

The usage (RRC parameter "usage," L1 (Layer-1) parameter "SRS-SetUse") may be beam management (beamManagement), codebook (CB), non-codebook (noncodebook (NCB)), antenna switching, or the like, for example. An SRS with the usage of codebook or non-codebook may be used for determination of a precoder of codebook-based or non-codebook-based PUSCH transmission based on an SRI.

For example, in a case of codebook-based transmission, the UE may determine a precoder for PUSCH transmission on the basis of an SRI, a transmitted rank indicator (TRI), and a transmitted precoding matrix indicator (TPMI). In a case of non-codebook-based transmission, the UE may determine a precoder of PUSCH transmission on the basis of an SRI.

The SRS resource information may include an SRS resource ID (SRS-ResourceId), the number of SRS ports, SRS port numbers, transmission Comb, SRS resource mapping (for example, time and/or frequency resource location, a resource offset, the cycle of the resource, the number of repetitions, the number of SRS symbols, an SRS bandwidth, and the like), hopping related information, an SRS resource type, a sequence ID, spatial relation information of the SRS, and the like.

The spatial relation information of the SRS (for example, an RRC information element "spatialRelationInfo") may indicate spatial relation information between a certain reference signal and the SRS. The certain reference signal may be at least one of a synchronization signal / broadcast channel (Synchronization Signal / Physical Broadcast Channel (SS/PBCH)) block, a channel state information reference signal (CSI-RS), and an SRS (for example, another SRS). The SS/PBCH block may be referred to as a synchronization signal block (SSB).

The spatial relation information of the SRS may include at least one of an SSB index, a CSI-RS resource ID, and an SRS resource ID as an index of the certain reference signal.

Note that, in the present disclosure, an SSB index, an SSB resource ID, and an SSB Resource Indicator (SSBRI) may be interchangeably interpreted. A CSI-RS index, a CSI-RS resource ID, and a CSI-RS Resource Indicator (CRI) may be interchangeably interpreted. An SRS index, an SRS resource ID, and an SRI may be interchangeably interpreted.

The spatial relation information of the SRS may include a serving cell index corresponding to the certain reference signal, a BWP index (BWP ID), and the like.

When spatial relation information related to an SSB or a CSI-RS and an SRS is configured for a certain SRS resource, the UE may transmit the SRS resource by using the same spatial domain filter (spatial domain transmission filter) as the spatial domain filter (spatial domain receive filter) for reception of the SSB or the CSI-RS. In this case, the UE may assume that a UE receive beam for the SSB or the CSI-RS is the same as a UE transmit beam for the SRS.

For a certain SRS (target SRS) resource, when spatial relation information related to another SRS (reference SRS) and the SRS (target SRS) is configured the UE may transmit the target SRS resource by using the same spatial domain filter (spatial domain transmission filter) as the spatial domain filter (spatial domain transmission filter) for transmission of the reference SRS. In other words, in this case, the UE may assume that a UE transmit beam for the reference SRS and a UE transmit beam for the target SRS are the same.

On the basis of a value of a certain field (for example, an SRS resource indicator (SRI) field) in DCI (for example, DCI format 0_1), the UE may determine the spatial relation of a PUSCH scheduled by the DCI. Specifically, the UE may use the spatial relation information of the SRS resource (for example, the RRC information element "spatialRelationInfo") determined on the basis of the value (for example, an SRI) of the certain field, for the PUSCH transmission.

When codebook-based transmission is employed for the PUSCH, the UE may be configured with two SRS resources per SRS resource set by RRC and indicated with one of the two SRS resources by DCI (SRI field of one bit). When non-codebook-based transmission is employed for the PUSCH, the UE may be configured with four SRS resources per SRS resource set by RRC and indicated with one of the four SRS resources by DCI (SRI field of two bits).

### (TPMI and Transmission Rank)

It is studied, for Rel. 16, that a transmitted precoding matrix indicator (TPMI) and a transmission rank for codebook-based PUSCH transmission are indicated by a particular field (for example, precoding information and layer number field) included in downlink control information (for example, DCI format 0_1).

The precoder to be used by the UE for codebook-based PUSCH transmission may be selected from an uplink codebook with the number of antenna ports equal to a value configured by a higher layer parameter (for example, nrofSRS-Ports) configured for an SRS resource.

The size (number of bits) of the particular field is variable depending on the number of antenna ports (for example, the number of ports indicated by the nrofSRS-Ports) for the PUSCH and some higher layer parameters.

When a higher layer parameter (for example, txConfig) configured for the UE is configured to be non-codebook (nonCodebook), the particular field may be 0 bit.

When a higher layer parameter (for example, txConfig) configured for the UE is configured to be codebook for one antenna port, the particular field may be 0 bit.

When a higher layer parameter (for example, txConfig) configured for the UE is configured to be codebook for four antenna ports, the particular field may have a bit length of two to six bits on the basis of at least one of another higher layer parameter configured for the UE and presence/absence (valid or invalid) of a transform precoder.

When a higher layer parameter (for example, txConfig) configured for the UE is configured to be codebook for two antenna ports, the particular field may have a bit length of one to four bits on the basis of at least one of another higher layer parameter configured for the UE and presence/absence (valid or invalid) of a transform precoder.

The other higher layer parameter may be at least one of a parameter for indicating a UL full power transmission mode (for example, ul-FullPowerTransmission), a parameter indicating the maximum value of a UL transmission rank (for example, maxRank), a parameter indicating a subset of a certain precoding matrix indicator (PMI) (for example, codebookSubset), and a parameter for indicating a transform precoder (for example, transformPrecoder).

### (Multi-TRP)

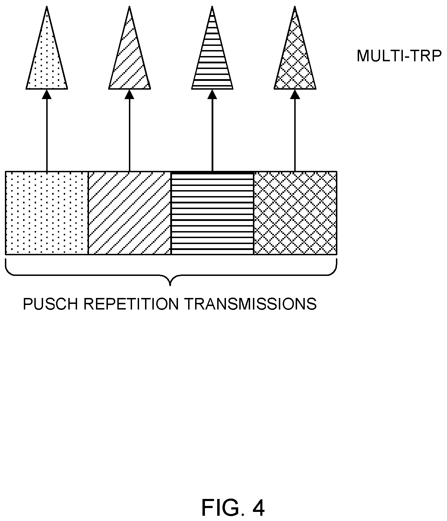

It is studied, for NR, that one or a plurality of transmission/reception points (TRPs) (multi-TRP) perform DL transmission to the UE by using one or a plurality of panels (multi-panel). It is also studied that the UE performs UL transmission to the one or plurality of TRPs (see FIG. 4).

The plurality of TRPs may correspond to the same cell identifier (ID) or may correspond to different cell IDs. The cell ID may be a physical cell ID or a virtual cell ID.

However, for previous NR specifications, how to control repetition transmissions of PUSCHs in multi-panel/TRP (when multi-panel/TRP is configured) has not been studied sufficiently. When repetition transmissions of PUSCHs in multi-TRP are not performed appropriately, throughput may decrease, and communication quality may degrade.

More specifically, a case where PUSCH repetition transmissions in a plurality of TRPs are configured to be enabled and a particular number of (for example, two) SRI fields are included in one piece of DCI for repetition transmissions of PUSCHs in a plurality of TRPs is studied.

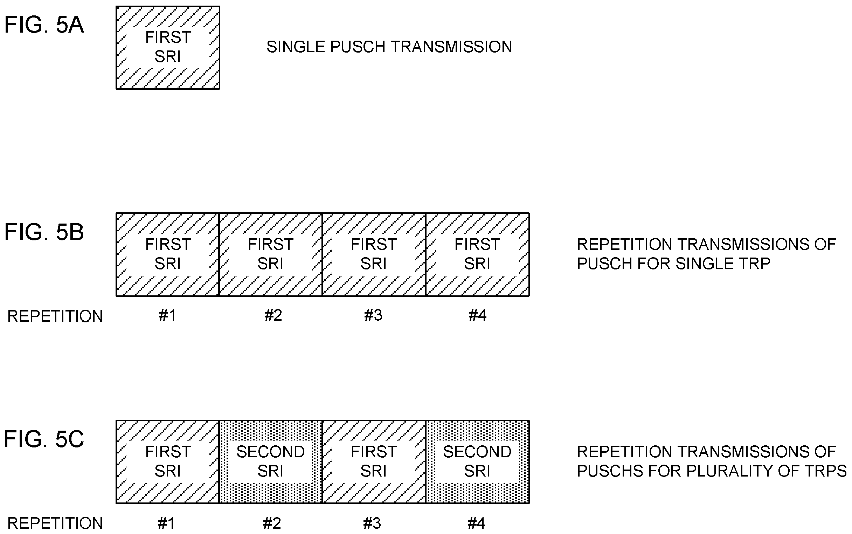

FIGS. 5A to 5C are diagrams to show examples of a single PUSCH transmission, repetition transmissions of a PUSCH for a single TRP, and repetition transmissions of PUSCHs for a plurality of TRPs. In the example shown in FIG. 5A, the UE performs a single PUSCH transmission by using a first SRI determined on the basis of a first SRI field. In the example shown in FIG. 5B, the UE performs repetition transmissions of a PUSCH for a single TRP by using a first SRI determined on the basis of a first SRI field. In the example shown in FIG. 5C, the UE performs repetition transmissions of PUSCHs for a plurality of TRPs by using the first SRI determined on the basis of the first SRI field and a second SRI determined on the basis of a second SRI field.

However, it is not sufficiently studied how to control dynamic switch (switching) between a single PUSCH transmission (see FIG. 5A) and repetition transmissions of PUSCHs for a plurality of TRPs (see FIG. 5C) in such a case. Furthermore, it is not sufficiently studied how to control dynamic switch between repetition transmissions of a PUSCH for a single TRP (see FIG. 5B) and repetition transmissions of PUSCHs for a plurality of TRPs in such a case. Thus, the inventors of the present invention came up with the idea of a method of controlling PUSCH repetition transmissions to solve the above-described problems.

Hereinafter, embodiments according to the present disclosure will be described in detail with reference to the drawings. The radio communication methods according to respective embodiments may each be employed individually, or may be employed in combination.

Note that, in the present disclosure, a port, a panel, a beam, an Uplink (UL) transmission entity, a TRP, spatial relation information (SRI), a spatial relation, a control resource set (CORESET), a PDSCH, a codeword, a base station, a certain antenna port (for example, a demodulation reference signal (DMRS) port), a certain antenna port group (for example, a DMRS port group), a certain group (for example, a code division multiplexing (CDM) group, a certain reference signal group, a CORESET group, a panel group, a beam group, a spatial relation group, a PUCCH group), and a CORESET pool may be interchangeably interpreted. A panel Identifier (ID) and a panel may be interchangeably interpreted. A TRP ID and a TRP may be interchangeably interpreted.

In the present disclosure, an index, an ID, an indicator, and a resource ID may be interchangeably interpreted.

In the present disclosure, "A/B" may mean "at least one of A and B." In the present disclosure, "A/B/C" may mean "at least one of A, B, and C."

In the present disclosure, a list, a group, a cluster, a subset, and the like may be interchangeably interpreted. In the present disclosure, spatial relation information (SRI), an SRS resource indicator (SRI) (or an SRI field), an SRS resource, a precoder, and the like may be interchangeably interpreted.

In the present disclosure, spatial relation information (SRI), a combination of SRIs, SRI for codebook-based transmission, a combination of non-codebook-based SRIs, spatialRelationInfo, UL TCI, TCI state, Unified TCI, QCL, and the like may be interchangeably interpreted.

In the present disclosure, a first TRP and a second TRP may be interpreted as a first PUSCH and a second PUSCH, a first PUSCH transmission occasion and a second PUSCH transmission occasion, first SRI and second SRI, and the like, and vice versa.

In the following embodiments, repetition transmissions of PUSCHs for a plurality of TRPs may be interpreted as a PUSCH over a plurality of TRPs, repetition PUSCHs over a plurality of TRPs, repetition PUSCHs simply, repetition transmissions, a plurality of PUSCH transmissions, and the like, and vice versa. A single PUSCH transmission for a single TRP may be referred to as a single PUSCH transmission simply, a PUSCH transmission in a single TRP, and the like.

In the present disclosure, repetition transmissions of a PUSCH for a single TRP may mean repetition transmissions of a plurality of PUSCHs transmitted by using the same SRI/beam/precoder.

In the present disclosure, repetition transmissions of PUSCHs for a plurality of TRPs may mean repetition transmissions of a plurality of PUSCHs transmitted by using a plurality of different SRIs/beams/precoders. The repetition transmissions and the plurality of SRIs/beams/precoders may correspond cyclically, correspond sequentially every particular number, or correspond using a half-half pattern (mapping). Cyclic correspondence, sequential correspondence, and correspondence using a half-half pattern (mapping) will be described in detail in the following embodiments.

Note that, although a description will be given by taking PUSCH transmission for a plurality of TRPs using one piece of DCI and codebook-based PUSCH transmission as examples in each of the embodiments of the present disclosure, each of the embodiments may be applied to non-codebook-based PUSCH transmission, and PUSCH transmission to which each of the embodiments is applicable is not limited to these. When each of the embodiments of the present disclosure is applied to non-codebook-based PUSCH transmission, one or more SRS resources (SRIs) may be indicated to a UE by each SRI field. A common or different embodiments may be applied to codebook-based PUSCH transmission and non-codebook-based PUSCH transmission.

Although a description will be given by using a case where the number of a plurality of TRPs, the number of a plurality of SRIs, and the like are two as a main example in each of the embodiments of the present disclosure, these numbers may be three or more. "Dynamic switch" in the present disclosure may mean "switch using at least one of higher layer signaling and physical layer signaling." "Switch" in the present disclosure may be interpreted as switching, change, changing, application, and the like, and vice versa.

### (Radio Communication Method)

### <First Embodiment>

In a first embodiment, dynamic switch between a single PUSCH transmission / repetition transmissions of a PUSCH in a single TRP and repetition transmissions of PUSCHs in a plurality of TRPs need not necessarily be performed. In other words, in specifications, dynamic switch between a single PUSCH transmission / repetition transmissions of a PUSCH in a single TRP and repetition transmissions of PUSCHs in a plurality of TRPs need not necessarily be supported.

A description will be given of a case where dynamic switch between repetition transmissions of a PUSCH in a single TRP and repetition transmissions of PUSCHs in a plurality of TRPs is not performed (Embodiment 1-1). In Embodiment 1-1, when repetition transmissions in a plurality of TRPs are configured to be enabled by higher layer signaling (for example, RRC signaling / MAC CE), the UE may assume (expect) that repetition transmissions of PUSCHs using a particular number of (for example, two or more) different SRIs are indicated.

In Embodiment 1-1, dynamic switch between repetition transmissions of a PUSCH in a single TRP and repetition transmissions of PUSCHs in a plurality of TRPs need not necessarily be permitted (Embodiment 1-1-1). In Embodiment 1-1-1, when a plurality of SRI fields are included in one piece of DCI, it is desirable, for example, that an SRI indicated by a first SRI field and an SRI indicated by a second SRI field be different from each other.

A description will be given of a case where dynamic switch between a single PUSCH transmission and repetition transmissions of PUSCHs in a plurality of TRPs is not performed (Embodiment 1-2). In Embodiment 1-2, the UE may assume (expect) that there is no case where repetition transmissions in a plurality of TRPs are configured to be enabled by higher layer signaling (for example, RRC signaling / MAC CE) and the number of repetitions of the repetition transmissions is configured/indicated to be one.

### <Second Embodiment>

In a second embodiment, dynamic switch between repetition transmissions of a PUSCH in a single TRP and repetition transmissions of PUSCHs in a plurality of TRPs may be performed. In other words, in specifications, dynamic switch between repetition transmissions of a PUSCH in a single TRP and repetition transmissions of PUSCHs in a plurality of TRPs may be supported.

In the second embodiment, when repetition transmissions in a plurality of TRPs are configured to be enabled by higher layer signaling (for example, RRC signaling / MAC CE), a particular number of (for example, two) SRI fields may be included in one piece of DCI. When a parameter related to the number of repetitions notified by the DCI is indicated/configured to be a value larger than one, the UE may determine to perform either repetition transmissions for a single TRP or repetition transmissions for a plurality of TRPs, by at least one of the methods described in Embodiments 2-1 to 2-3 below.

Embodiment 2-1: Determine whether to perform repetition transmissions for a single TRP or repetition transmissions for a plurality of TRPs on the basis of whether the particular number of (for example, two) SRI fields indicate the same SRS resource (SRI) or indicate different SRIs.

Embodiment 2-2: Determine whether to perform repetition transmissions for a single TRP or repetition transmissions for a plurality of TRPs on the basis of whether a code point not applied is indicated in each of a plurality of SRI fields.

Embodiment 2-3: Determine whether to perform repetition transmissions for a single TRP or repetition transmissions for a plurality of TRPs on the basis of a particular field included in the DCI.

Note that, in the present disclosure, the code point not applied may be interpreted as a not-applicable code point, a reserved code point, a code point indicating Not applied, and the like. For example, in Embodiment 2-2, the code point not applied may be a reserved code point of an SRI field in Rel. 16. "Not applied" in the present disclosure may be interpreted as "Not Applicable," "Not Available," "N/A," "not valid," and the like, and vice versa.

Note that, in Embodiment 2-3, the particular field included in the DCI may be a field introduced in Rel. 17 (or later versions) or may use a reserved code point of a particular field included in DCI defined in Rel. 16 (or previous versions).

### <<Embodiment 2-1>>

In Embodiment 2-1, the UE may determine whether to perform repetition transmissions for a single TRP or repetition transmissions for a plurality of TRPs on the basis of either the particular number of (for example, two) SRI fields indicate the same SRS resource (SRI) or indicate different SRIs.

For example, when the same SRS resource (SRI) is indicated in a plurality of (for example, two) SRI fields, the UE may determine that repetition transmissions of a plurality of PUSCHs are performed in the same SRI (for example, a single TRP). In other words, when the same SRS resource (SRI) is indicated in a plurality of (for example, two) SRI fields, the UE may determine to perform repetition transmissions of a PUSCH in a single TRP.

For example, when different SRS resources (SRIs) are indicated in a plurality of (for example, two) SRI fields, the UE may determine that repetition transmissions of a plurality of PUSCHs are performed in different SRIs (for example, a plurality of TRPs). In other words, when different SRS resources (SRIs) are indicated in a plurality of (for example, two) SRI fields, the UE may determine to perform repetition transmissions of PUSCHs in a plurality of TRPs.

When the UE determines to perform repetition transmissions of PUSCHs in a plurality of TRPs, the UE may judge that a plurality of SRIs cyclically correspond to a plurality of repetition transmissions.

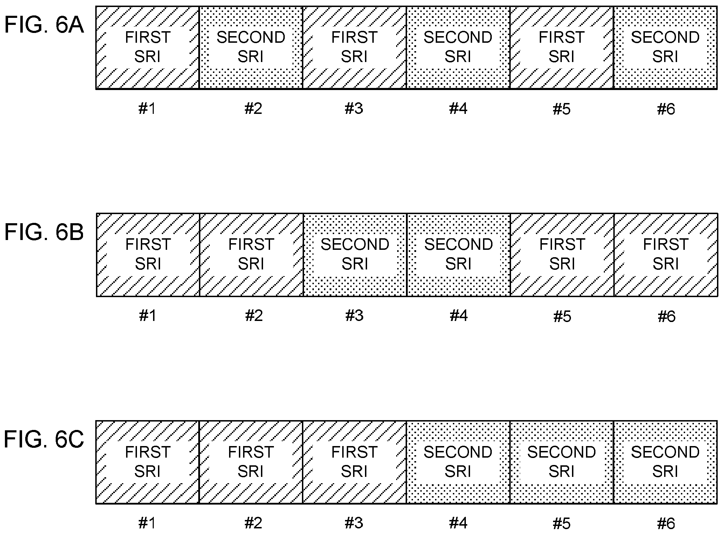

FIG. 6A is a diagram to show an example of a plurality of SRIs and a plurality of repetition transmissions correspond cyclically. In FIG. 6A, the UE is indicated with six as the number of repetitions and performs repetition transmissions of PUSCHs using a first SRI and a second SRI. In the example shown in FIG. 6A, the UE cyclically performs a PUSCH transmission using the first SRI and a PUSCH transmission using the second SRI. For example, the first SRI may be applied to odd-numbered repetitions (repetitions #1, #3, and #5) while the second SRI may be applied to even numbered repetitions (repetitions #0, #2, and #4) .

When the UE determines to perform repetition transmissions of PUSCHs in a plurality of TRPs, the UE may judge that a plurality of SRIs sequentially correspond to a plurality of repetition transmissions every particular number of (for example, two) repetition transmissions.

FIG. 6B is a diagram to show an example of a plurality of SRIs and a plurality of repetition transmissions correspond sequentially. In FIG. 6B, the UE is indicated with six as the number of repetitions and performs repetition transmissions of PUSCHs using a first SRI and a second SRI. In the example shown in FIG. 6B, the UE sequentially performs a PUSCH transmission using the first SRI twice and a PUSCH transmission using the second SRI twice.

When the UE determines to perform repetition transmissions of PUSCHs in a plurality of TRPs, a plurality of SRIs and a plurality of repetition transmissions may correspond consecutively so as to approximately match the number obtained by dividing the number of repetitions by the number of SRIs. When the number of SRIs is two, the correspondence may be referred to as a half-half pattern (mapping).

FIG. 6C is a diagram to show an example using the half-half pattern for the correspondence between a plurality of SRIs and a plurality of repetition transmissions. In FIG. 6C, the UE is indicated with six as the number of repetitions and performs repetition transmissions of PUSCHs using the first SRI and the second SRI. In the example shown in FIG. 6C, the UE performs PUSCH transmissions using the first SRI in the first half (first three times) of PUSCH transmission occasions and PUSCH transmissions using the second SRI in the second half (subsequent three times) of the PUSCH transmission occasions.

Note that the numbers of repetitions of PUSCH transmissions, the number of SRIs, and the like shown in FIGS. 6A to 6C are merely examples and are not limited to these. The numbers of repetitions of PUSCH transmissions, the number of code points / code point names of each field, the number of bits, the number of SRIs, and the like shown in the following drawings are merely examples and are not limited to these.

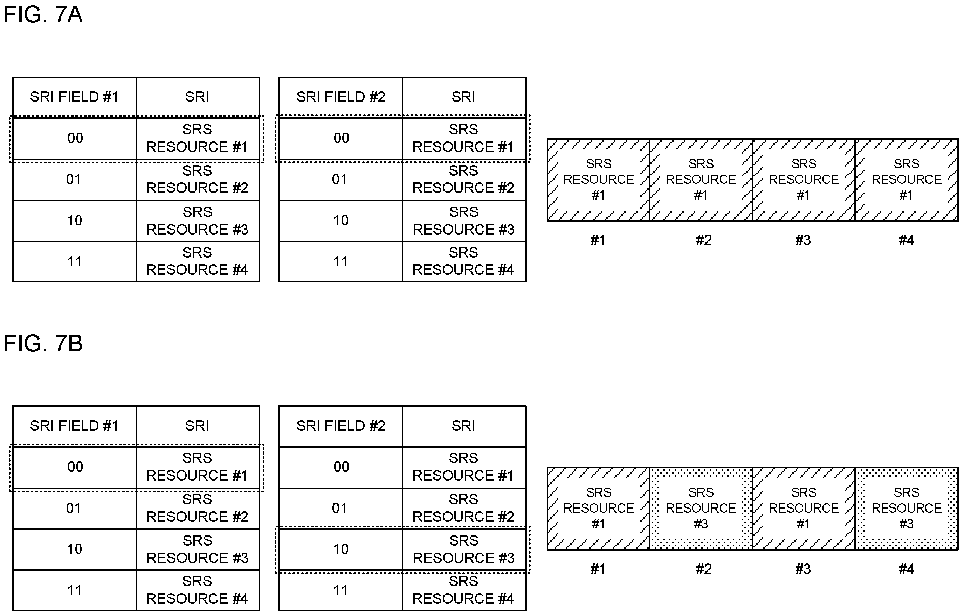

FIG. 7A is a diagram to show an example of repetition transmissions of a PUSCH for a single TRP according to Embodiment 2-1. In FIG. 7A, two SRI fields (SRI field #1 and SRI field #2) are configured for the UE. In the example shown in FIG. 7A, the number of repetitions indicated to the UE is four.

In the example shown in FIG. 7A, SRS resource #1 is indicated from each of SRI field #1 and SRI field #2 to the UE. Since the SRS resources indicated in the two respective SRI fields are the same, the UE determines to perform repetition transmissions of a PUSCH in a single TRP.

FIG. 7B is a diagram to show an example of repetition transmissions of PUSCHs for a plurality of TRPs according to Embodiment 2-1. In FIG. 7B, two SRI fields (SRI field #1 and SRI field #2) are configured for the UE. In the example shown in FIG. 7B, the number of repetitions indicated to the UE is four.

In the example shown in FIG. 7B, SRS resource #1 is indicated from SRI field #1, and SRS resource #3 is indicated from SRI field #2, to the UE. Since the SRS resources indicated in the two respective SRI fields are different from each other, the UE determines to perform repetition transmissions of PUSCHs in a plurality of TRPs. Note that, although the correspondence between repetition transmissions and SRS resources described in FIG. 7B is described on the basis of the cyclic correspondence, this is not restrictive.

Note that, it may be assumed that, when different SRI fields correspond to respective different SRS resource sets (or SRS resource groups), Embodiment 2-1 cannot be applied.

### <<Embodiment 2-2>>

In Embodiment 2-2, the UE may determine whether to perform repetition transmissions for a single TRP or repetition transmissions for a plurality of TRPs on the basis of whether a code point not applied is indicated in each of a plurality of SRI fields. The UE may assume that one "code point not applied" is indicated at maximum.

For example, when only one SRS resource (SRI) is applied in a plurality of (for example, two) SRI fields, the UE may determine that a plurality of repetition transmissions of PUSCHs are performed in the applied (valid) SRI. In other words, when one valid SRS resource (SRI) is indicated and one SRI not valid (for example, reserved code point) is indicated in a plurality of SRI fields, the UE may determine to perform repetition transmissions of a PUSCH in a single TRP.

The UE may assume to perform, when one reserved code point is indicated, repetition transmissions of a PUSCH for a single TRP. In this case, the UE may use an SRI defined in advance to perform repetition transmissions of a PUSCH for a single TRP. The SRI defined in advance may be an SRI notified/configured by higher layer signaling or may be an SRI corresponding to a particular code point included in DCI. The particular code point may be the smallest (largest) code point (for example, 00 in a case of two bits).

For example, when the plurality of SRS resources (SRIs) are applied in a plurality of (for example, two) SRI fields, the UE may determine that a plurality of repetition transmissions of PUSCHs are performed in a plurality of SRIs (for example, a plurality of TRPs). In other words, when the plurality of SRS resources (SRIs) are applied in a plurality of SRI fields, the UE may determine to perform repetition transmissions of PUSCHs in a plurality of TRPs.

When the UE determines to perform repetition transmissions of PUSCHs in a plurality of TRPs, the UE may judge that a plurality of SRIs cyclically correspond to a plurality of repetition transmissions.

When the UE determines to perform repetition transmissions of PUSCHs in a plurality of TRPs, the UE may judge that a plurality of SRIs sequentially correspond to a plurality of repetition transmissions every particular number of (for example, two) repetition transmissions.

When the UE determines to perform repetition transmissions of PUSCHs in a plurality of TRPs, the UE may judge that a plurality of SRIs and a plurality of repetition transmissions correspond consecutively so as to approximately match the number obtained by dividing the number of repetitions by the number of SRIs.

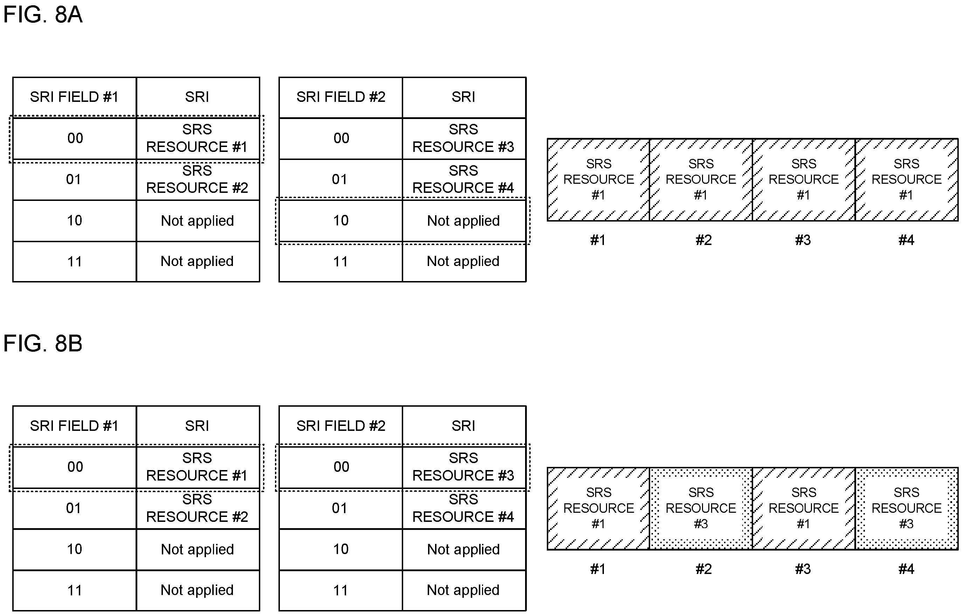

FIG. 8A is a diagram to show an example of repetition transmissions of a PUSCH for a single TRP according to Embodiment 2-2. In FIG. 8A, two SRI fields (SRI field #1 and SRI field #2) are configured for the UE. In the example shown in FIG. 8A, the number of repetitions indicated to the UE is four.

In the example shown in FIG. 8A, SRS resource #1 is indicated from SRI field #1, and an SRI being "Not applied " is indicated from SRI field #2, to the UE. Since the SRS resource indicated in one SRI field is an SRI not applied, the UE determines to perform repetition transmissions of a PUSCH for a single TRP using SRS resource #1.

FIG. 8B is a diagram to show an example of repetition transmissions of PUSCHs for a plurality of TRPs according to Embodiment 2-2. In FIG. 8B, two SRI fields (SRI field #1 and SRI field #2) are configured for the UE. In the example shown in FIG. 8B, the number of repetitions indicated to the UE is four.

In the example shown in FIG. 8B, SRS resource #1 is indicated from SRI field #1, and SRS resource #3 is indicated from SRI field #2, to the UE. Since neither of the SRS resources indicated in the two respective SRI fields are SRIs not applied, the UE determines to perform repetition transmissions of PUSCHs in a plurality of TRPs. Note that, although the correspondence between repetition transmissions and SRS resources described in FIG. 8B is described on the basis of the cyclic correspondence, this is not restrictive.

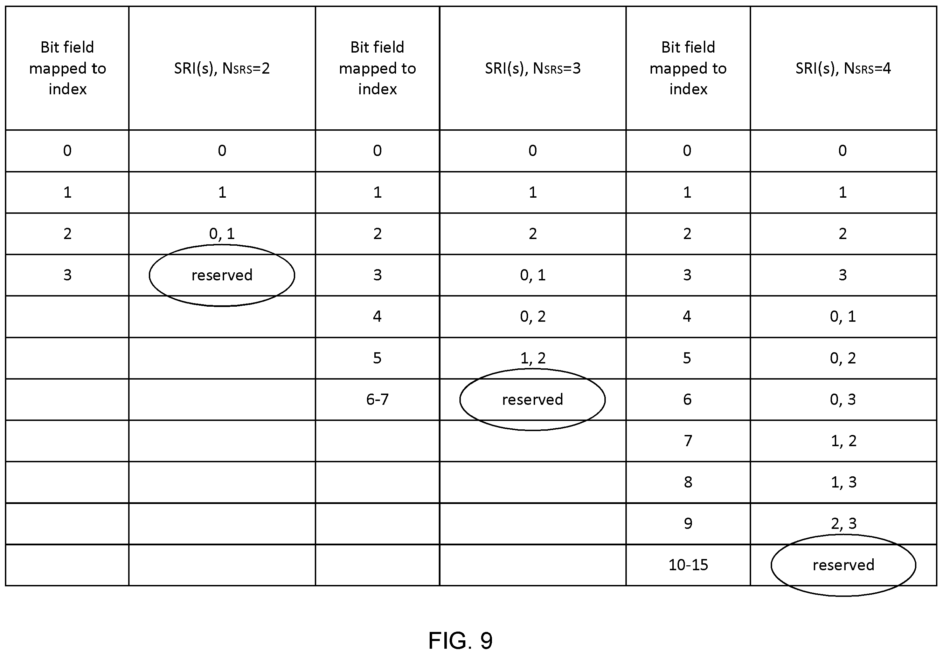

FIG. 9 is a diagram to show an example of SRI fields defined in Rel. 16 (or previous versions). As shown in FIG. 9, by using reserved code points included in the SRI fields defined in Rel. 16 (or previous versions), each code point not applied may be indicated to the UE.

Note that, it may be assumed that, when different SRI fields correspond to respective different SRS resource sets (SRS resource groups), Embodiment 2-2 can be applied.

### <<Embodiment 2-3>>

In Embodiment 2-3, the UE may determine to perform either repetition transmissions for a single TRP or repetition transmissions for a plurality of TRPs on the basis of a particular field included in the DCI.

For example, when application of either one of the first SRI field and the second SRI field among a plurality of (for example, two) SRI fields (first SRI field and second SRI field) is indicated by a field included in the DCI, the UE may determine that a plurality of repetition transmissions of PUSCHs are performed in the applied SRI. In other words, when application of one SRI field among the plurality of SRI fields is indicated by a field included in the DCI, the UE may determine to perform repetition transmissions of a PUSCH in a single TRP.

For example, when application of both the first SRI field and the second SRI field among a plurality of (for example, two) SRI fields (first SRI field and second SRI field) is indicated by a field included in the DCI, the UE may determine that a plurality of repetition transmissions of PUSCHs are performed in a plurality of SRIs (for example, a plurality of TRPs). In other words, when application of a plurality of SRI fields is indicated by a field included in the DCI, the UE may determine to perform repetition transmissions of PUSCHs in a plurality of TRP.

When the UE determines to perform repetition transmissions of PUSCHs in a plurality of TRPs, the UE may judge that a plurality of SRIs cyclically correspond to a plurality of repetition transmissions.

When the UE determines to perform repetition transmissions of PUSCHs in a plurality of TRPs, the UE may judge that a plurality of SRIs sequentially correspond to a plurality of repetition transmissions every particular number of (for example, two) repetition transmissions.

When the UE determines to perform repetition transmissions of PUSCHs in a plurality of TRPs, the UE may judge that a plurality of SRIs and a plurality of repetition transmissions correspond consecutively so as to approximately match the number obtained by dividing the number of repetitions by the number of SRIs.

Note that, in Embodiment 2-3, when configuration is performed by using higher layer signaling, the UE may assume that a particular field included in the DCI is present.

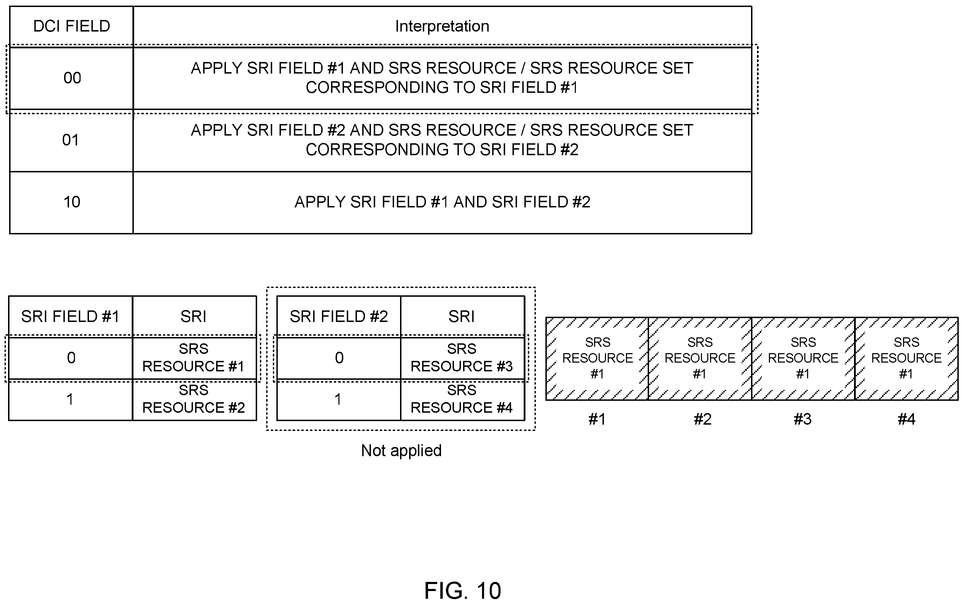

FIG. 10 is a diagram to show an example of repetition transmissions of a PUSCH for a single TRP according to Embodiment 2-3. In FIG. 10, two SRI fields (SRI field #1 and SRI field #2) are configured for the UE. In the example shown in FIG. 10, the number of repetitions indicated to the UE is four.

In the example shown in FIG. 10, application of SRI field #1 and an SRS resource / SRS resource set corresponding to SRI field #1 is indicated to the UE by a field included in the DCI. Moreover, SRS resource #1 is indicated from SRI field #1, and SRS resource #3 is indicated from SRI field #2, to the UE. The UE determines to perform repetition transmissions of a PUSCH for a single TRP using SRS resource #1, by the field included in the DCI. In this case, the UE may ignore the indication related to SRI field #2.

Note that, although the case where the UE ignores indication related to an SRI field not indicated by a field in DCI is described in the example shown in FIG. 10, the UE need not necessarily receive indication related to an SRI field not indicated by a field in the DCI.

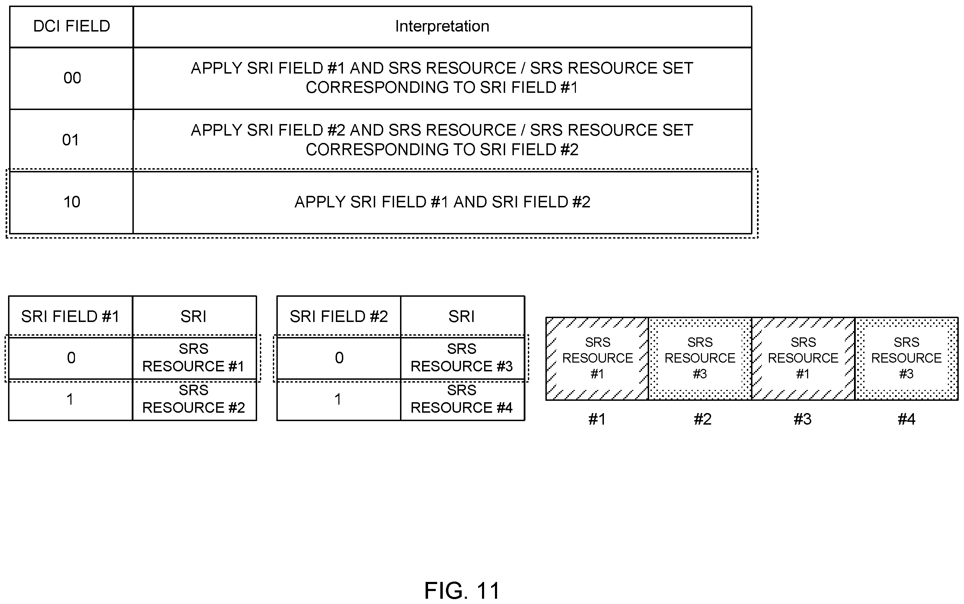

FIG. 11 is a diagram to show an example of repetition transmissions of PUSCHs for a plurality of TRPs according to Embodiment 2-3. In FIG. 11, two SRI fields (SRI field #1 and SRI field #2) are configured for the UE. In the example shown in FIG. 11, the number of repetitions indicated to the UE is four.

In the example shown in FIG. 11, application of SRI field #1 and SRI field #2 is indicated to the UE by a field included in the DCI. Moreover, SRS resource #1 is indicated from SRI field #1, and SRS resource #3 is indicated from SRI field #2, to the UE. The UE determines to perform repetition transmissions of PUSCHs for a plurality of TRPs using SRS resource #1 and SRS resource #3, by the field included in the DCI. Note that, although the correspondence between repetition transmissions and SRS resources described in FIG. 11 is described on the basis of the cyclic correspondence, this is not restrictive.

Note that, it may be assumed that, when different SRI fields correspond to respective different SRS resource sets (SRS resource groups), Embodiment 2-3 can be applied.

### <<Variations of Second Embodiment>>

Conceivable is a case where, in Embodiment 2-2, a plurality of TPMI / transmit power control (TPC) command / phase tracking reference signal (PTRS)-demodulation reference signal (DMRS) fields are indicated to the UE and a code point indicating a TPMI / TPC command / PTRS-DMRS field not applied is present in the plurality of TPMI / TPC command / PTRS-DMRS fields.

In such a case, when a TPMI / TPC command / PTRS-DMRS field not applied is indicated to the UE, the UE may judge that an SRI corresponding to the indicated TPMI / TPC command / PTRS-DMRS field is an SRI not applied (Variation 2-2). In other words, when a TPMI / TPC command / PTRS-DMRS field not applied is indicated to the UE, the UE may determine to perform transmission of a PUSCH for a single TRP.

The TPMI / TPC command / PTRS-DMRS field and the SRI may have a one-to-one correspondence. For example, the TPMI / TPC command / PTRS-DMRS field with the n-th index and the SRI with the n-th index may correspond to each other.

As described in Embodiment 2-2, the UE may assume that one "code point not applied" is indicated at maximum.

Note that, in Variation 2-2, a reserved code point in a TPMI field defined in Rel. 16 (or previous versions) may be used as the code point not applied.

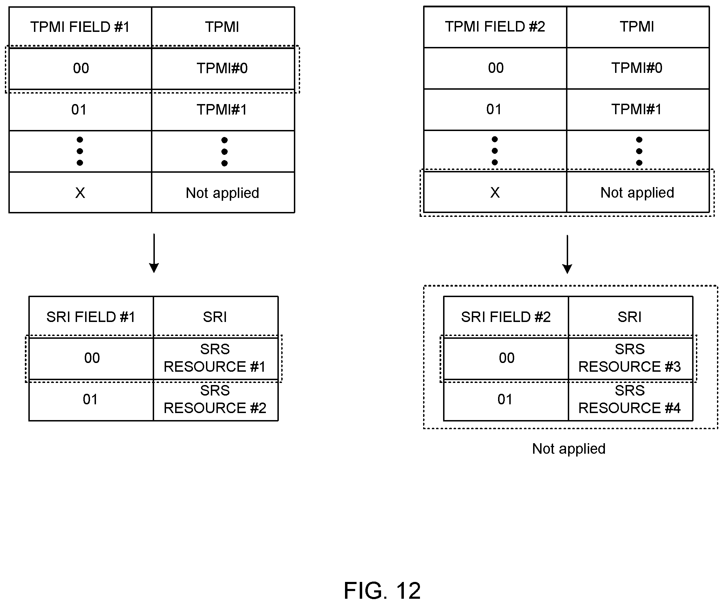

FIG. 12 is a diagram to show an example of a relationship between a TPMI field and an SRI field according to a variation of the second embodiment. In the example shown in FIG. 12, SRI field #1 corresponding to TPMI field #1 and SRI field #2 corresponding to TPMI field #2 are configured for the UE.

In the example shown in FIG. 12, TPMI #0 is indicated from TPMI field #1, and a TPMI being "Not applied" is indicated from TPMI field #2, to the UE. In this case, the UE may judge SRI field #1 corresponding to TPMI field #1 indicated with a valid TPMI to be valid while judging SRI field #2 corresponding to TPMI field #2 indicated with TPMI not applied not to be applied. In this example, even when "00" is indicated as SRI field #2, the UE does not apply an SRI (SRS resource #3) corresponding to SRI field #2 to repetition transmissions of a PUSCH.

In Embodiment 2-3, the particular field included in the DCI may be a field for indicating either a single SRI field or a plurality of SRI fields (Variation 2-3).

In Variation 2-3, when a single SRI field is indicated by the particular field included in the DCI, the UE may use a default SRI field. The default SRI field may be an SRI field with the lowest index / highest index / x-th (x is an integer) index or may be an SRI field located first / last / x-th (Variation 2-3-1).

In Variation 2-3, when a single SRI field is indicated by the particular field included in the DCI, the UE may determine any SRI field of the plurality of SRI fields semi-statically configured/updated by higher layer signaling (for example, RRC signaling / MAC CE), as an SRI field to apply to repetition transmissions of a PUSCH (Variation 2-3-2).

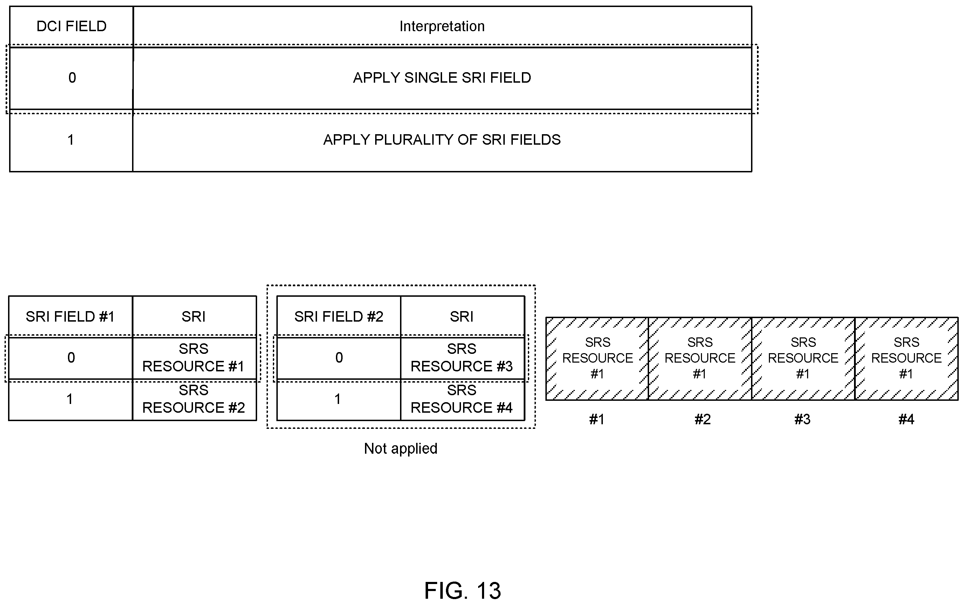

FIG. 13 is a diagram to show an example of repetition transmissions of a PUSCH for a single TRP according to Variation 2-3. In FIG. 13, two SRI fields (SRI field #1 and SRI field #2) are configured for the UE. In the example shown in FIG. 13, the number of repetitions indicated to the UE is four.

In the example shown in FIG. 13, application of a single SRI is indicated to the UE by a field included in the DCI. Moreover, SRS resource #1 is indicated from SRI field #1, and SRS resource #3 is indicated from SRI field #2, to the UE. In the example shown in FIG. 13, the default SRI field is SRI field #1. The UE determines to perform repetition transmissions of a PUSCH for a single TRP using SRS resource #1 being the default SRI field, by the field included in the DCI. In this case, the UE may ignore the indication related to SRI field #2.

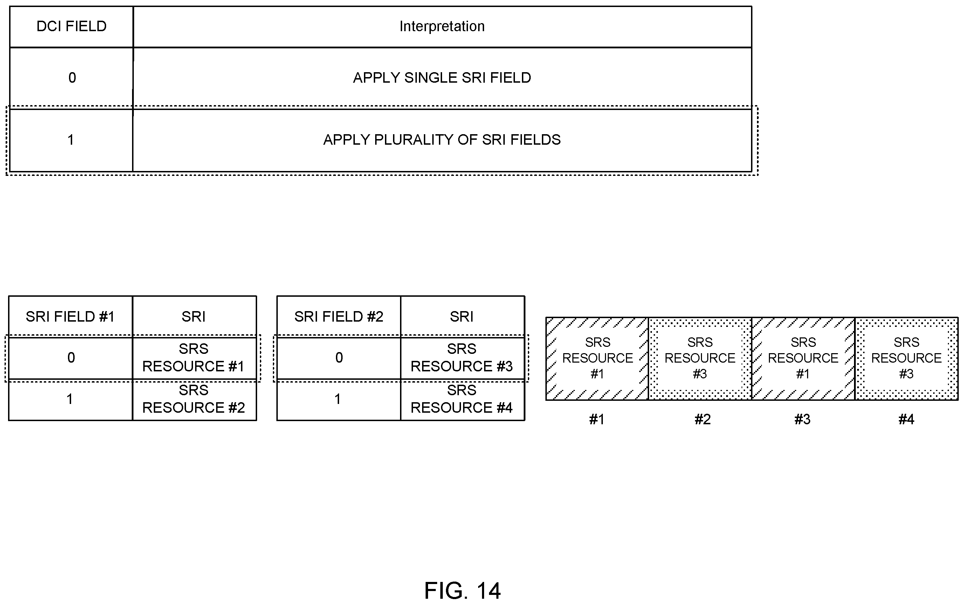

FIG. 14 is a diagram to show an example of repetition transmissions of PUSCHs for a plurality of TRPs according to Variation 2-3. In FIG. 14, two SRI fields (SRI field #1 and SRI field #2) are configured for the UE. In the example shown in FIG. 14, the number of repetitions indicated to the UE is four.

In the example shown in FIG. 14, application of a plurality of SRI fields is indicated to the UE by a field included in the DCI. Moreover, SRS resource #1 is indicated from SRI field #1, and SRS resource #3 is indicated from SRI field #2, to the UE. The UE determines to perform repetition transmissions of PUSCHs for a plurality of TRPs using SRS resource #1 and SRS resource #3, by the field included in the DCI. Note that, although the correspondence between repetition transmissions and SRS resources described in FIG. 14 is described on the basis of the cyclic correspondence, this is not restrictive.

Note that, in Embodiments 2-2 and 2-3, when a plurality of SRI fields and a plurality of TPMI / TPC command / PTRS-DMRS fields are indicated and when the UE determines that an SRI field is not applied, the TPMI / TPC command / PTRS-DMRS field corresponding to the SRI may also be determined not to be applied. In this case, the TPMI / TPC command / PTRS-DMRS field and the SRI may have a one-to-one correspondence. For example, the TPMI / TPC command / PTRS-DMRS field with the n-th index and the SRI with the n-th index may correspond to each other.

According to the second embodiment above, dynamic switching between repetition transmissions of a PUSCH for a single TRP and repetition transmissions of PUSCHs for a plurality of TRPs can be appropriately controlled.

### <Third Embodiment>

In a third embodiment, dynamic switch between a single PUSCH transmission and repetition transmissions of PUSCHs in a plurality of TRPs may be performed. In other words, in specifications, dynamic switch between a single PUSCH transmission and repetition transmissions of PUSCHs in a plurality of TRPs may be supported.

In the third embodiment, when repetition transmissions in a plurality of TRPs are configured to be enabled by higher layer signaling (for example, RRC signaling / MAC CE), a particular number of (for example, two) SRI fields may be included in one piece of DCI. When a single PUSCH transmission is indicated (for example, when one is configured/indicated as the number of repetitions) to the UE, the UE may determine an SRS resource (SRI) in which a single PUSCH transmission is performed, in at least one of the methods according to Embodiments 3-1 to 3-4 below.

### <<Embodiment 3-1>>

In Embodiment 3-1, the UE may assume that, when a single PUSCH transmission is indicated to the UE, a particular number of (for example, two) SRI fields indicate the same SRS resource (SRI).

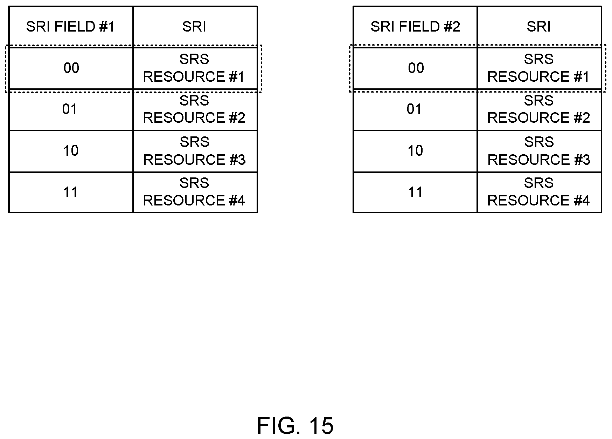

FIG. 15 is a diagram to show an example of a single PUSCH transmission according to Embodiment 3-1. In FIG. 15, two SRI fields (SRI field #1 and SRI field #2) are configured for the UE.

In the example shown in FIG. 15, SRS resource #1 is indicated from each of SRI field #1 and SRI field #2 to the UE. Since the SRS resources indicated in the two respective SRI fields are the same, the UE determines to perform a single PUSCH transmission.

Note that, it may be assumed that, when different SRI fields correspond to respective different SRS resource sets (or SRS resource groups), Embodiment 3-1 cannot be applied.

### <<Embodiment 3-2>>

In Embodiment 3-2, when a single PUSCH transmission is indicated to the UE, the UE may assume that at least one code point not applied is indicated in each of a plurality of SRI fields. In this case, the UE may assume that one "code point not applied" is indicated at maximum.

Note that, in Embodiment 3-2, a reserved code point in an SRI field defined in Rel. 16 (or previous versions) may be used as the code point not applied.

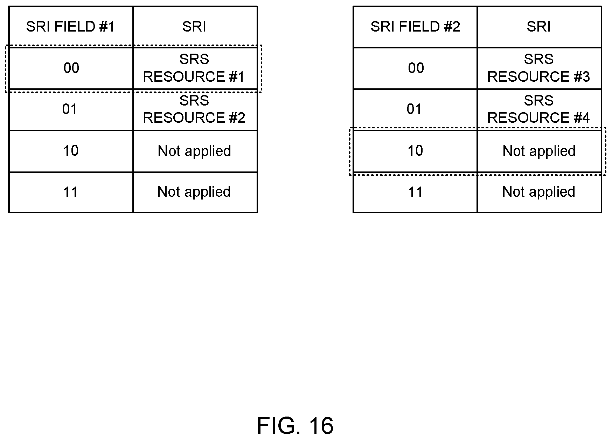

FIG. 16 is a diagram to show an example of a single PUSCH transmission according to Embodiment 3-2. In FIG. 16, two SRI fields (SRI field #1 and SRI field #2) are configured for the UE.

In the example shown in FIG. 16, SRS resource #1 is indicated from SRI field #1, and an SRI being "Not applied " is indicated from SRI field #2, to the UE. Since the SRS resource indicated in one SRI field is an SRI not applied, the UE determines to perform a single PUSCH transmission using SRS resource #1.

Note that, it may be assumed that, when different SRI fields correspond to respective different SRS resource sets (SRS resource groups), Embodiment 3-2 can be applied.

### <<Embodiment 3-3>>

In Embodiment 3-3, when a single PUSCH transmission is indicated to the UE, which SRI field to use may be indicated to the UE by a particular field included in DCI.

Note that, in Embodiment 3-3, the particular field included in the DCI may be a field introduced in Rel. 17 (or later versions) or may use a reserved code point of a particular field included in DCI defined in Rel. 16 (or previous versions).

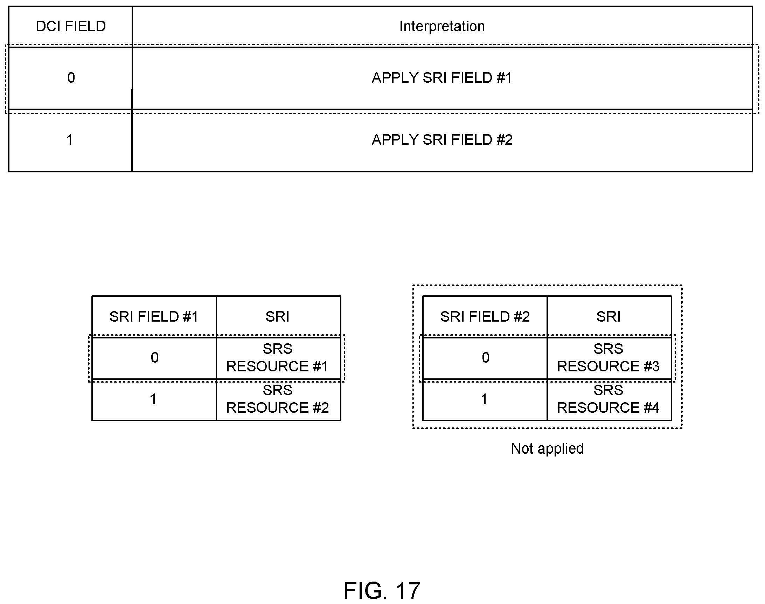

FIG. 17 is a diagram to show an example of a single PUSCH transmission according to Embodiment 3-3. In FIG. 17, two SRI fields (SRI field #1 and SRI field #2) are configured for the UE.

In the example shown in FIG. 17, application of SRI field #1 is indicated to the UE by a field included in the DCI. Moreover, SRS resource #1 is indicated from SRI field #1, and SRS resource #3 is indicated from SRI field #2, to the UE. The UE determines to perform a single PUSCH transmission using SRS resource #1 being the default SRI field, by the field included in the DCI. In this case, the UE may ignore the indication related to SRI field #2.

Note that, although the case where the UE ignores indication related to an SRI field for which application is not indicated by using DCI is described in the example shown in FIG. 17, the UE need not necessarily receive indication related to an SRI field for which application is not indicated by a field in DCI.

Note that, it may be assumed that, when different SRI fields correspond to respective different SRS resource sets (SRS resource groups), Embodiment 3-3 can be applied.

### <<Embodiment 3-4>>

In Embodiment 3-4, when a single PUSCH transmission is indicated to the UE, the UE may perform a single PUSCH transmission by using the default SRI field. The default SRI field may be an SRI field with the lowest/highest/x-th index. The default SRI field may be configured/updated by higher layer signaling (for example, RRC signaling / MAC CE).

Note that, in Embodiment 3-4, a particular field included in the DCI may be a field introduced in Rel. 17 (or later versions) or may use a reserved code point of a particular field included in DCI defined in Rel. 16 (or previous versions).

In Embodiment 3-4, the UE may ignore SRI fields other than the default SRI field, TPMI fields corresponding to the SRI fields other than the default SRI field, and TPC command fields corresponding to the SRI fields other than the default SRI field.

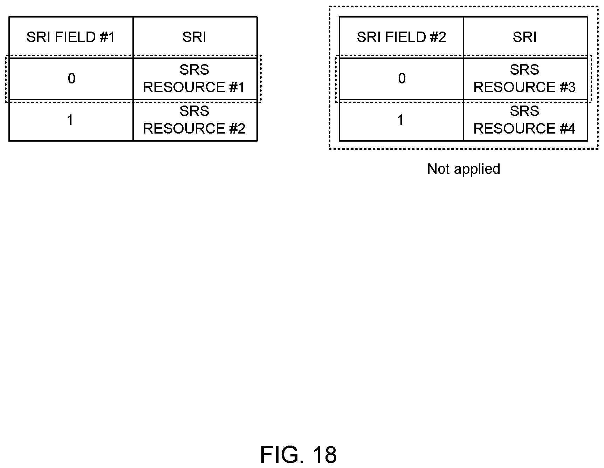

FIG. 18 is a diagram to show an example of a single PUSCH transmission according to Embodiment 3-4. In FIG. 18, two SRI fields (SRI field #1 and SRI field #2) are configured for the UE.

In the example shown in FIG. 18, SRS resource #1 is indicated from SRI field #1, and SRS resource #3 is indicated from SRI field #2, to the UE. In the example shown in FIG. 18, the default SRI field is SRI field #1. When a single PUSCH transmission is indicated to the UE, the UE performs a single PUSCH transmission by using SRI field #1 being the default SRI field. In this case, the UE may ignore the indication related to SRI field #2.

Note that, in Embodiment 3-4, it may be assumed that, when different SRI fields correspond to respective different SRS resource sets (SRS resource groups), Embodiment 3-4 can be applied.

### <<Variations of Third Embodiment>>

Conceivable is a case where, in Embodiment 3-2, a plurality of TPMI / transmit power control (TPC) command / phase tracking reference signal (PTRS)-demodulation reference signal (DMRS) fields are indicated to the UE and a code point indicating a TPMI / TPC command / PTRS-DMRS field not applied is present in the plurality of TPMI / TPC command / PTRS-DMRS fields.

In such a case, when a TPMI / TPC command / PTRS-DMRS field not applied is indicated to the UE, the UE may judge that an SRI corresponding to the indicated TPMI / TPC command / PTRS-DMRS field is an SRI not applied (Variation 3-2). In other words, when a TPMI / TPC command / PTRS-DMRS field not applied is indicated to the UE, the UE may determine to perform a single PUSCH transmission.

The TPMI / TPC command / PTRS-DMRS field and the SRI may have a one-to-one correspondence. For example, the TPMI / TPC command / PTRS-DMRS field with the n-th index and the SRI with the n-th index may correspond to each other.

As described in Embodiment 3-2, the UE may assume that one "code point not applied" is indicated at maximum. In Variation 3-2, the UE may perform control described in FIG. 12 above.

Note that, in a variation of Variation 3-2, a reserved code point in a TPMI field defined in Rel. 16 (or previous versions) may be used as the code point not applied.

Note that, in Embodiments 3-2, 3-3, and 3-4, when a plurality of SRI fields and a plurality of TPMI / TPC command / PTRS-DMRS fields are indicated and when the UE determines that an SRI field is not applied, the TPMI / TPC command / PTRS-DMRS field corresponding to the SRI may also be determined not to be applied. In this case, the TPMI / TPC command / PTRS-DMRS field and the SRI may have a one-to-one correspondence. For example, the TPMI / TPC command / PTRS-DMRS field with the n-th index and the SRI with the n-th index may correspond to each other.

According to the third embodiment above, dynamic switching between a single PUSCH transmission and repetition transmissions of PUSCHs for a plurality of TRPs can be appropriately controlled.

### <Fourth Embodiment>

In a fourth embodiment, a description will be given of UE capability related to dynamic switch between repetition transmissions of a PUSCH for a single TRP / a single PUSH transmission and repetition transmissions of PUSCHs for a plurality of TRPs. The UE may report (transmit) whether the UE has the capability to an NW.

The UE capability related to dynamic switch between repetition transmissions of a PUSCH for a single TRP / a single PUSCH transmission and repetition transmissions of PUSCHs for a plurality of TRPs may be defined as whether dynamic switch between a single PUSCH transmission and repetition transmissions of PUSCHs transmission for a plurality of TRPs is supported.

The UE capability related to dynamic switch between repetition transmissions of a PUSCH for a single TRP / a single PUSCH transmission and repetition transmissions of PUSCHs for a plurality of TRPs may be defined as whether dynamic switch between repetition transmissions of a PUSCH for a single TRP and repetition transmissions of PUSCHs transmission for a plurality of TRPs is supported.

The UE capability related to dynamic switch between repetition transmissions of a PUSCH for a single TRP / a single PUSCH transmission and repetition transmissions of PUSCHs for a plurality of TRPs may be defined as whether dynamic switch between a PUSCH transmission / repetition transmissions of a PUSCH for a single TRP for a first TRP and a PUSCH transmission / repetition transmissions of a PUSCH for a single TRP for a second TRP is supported.

The UE capability related to dynamic switch between repetition transmissions of a PUSCH for a single TRP / a single PUSCH transmission and repetition transmissions of PUSCHs for a plurality of TRPs may be defined as whether a plurality of SRI / TPMI / TPC command / PTRS-DMRS fields are supported.

Note that, each of the embodiments of the present disclosure may be applied under at least one of the conditions, i.e., when the UE reports the UE capability corresponding to at least one of the above to an NW and when configuration/activation/indication is performed for the UE for the at least one UE capability by higher layer signaling. Each of the embodiments of the present disclosure may be applied when a particular higher layer parameter is configured/activated/indicated to the UE.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

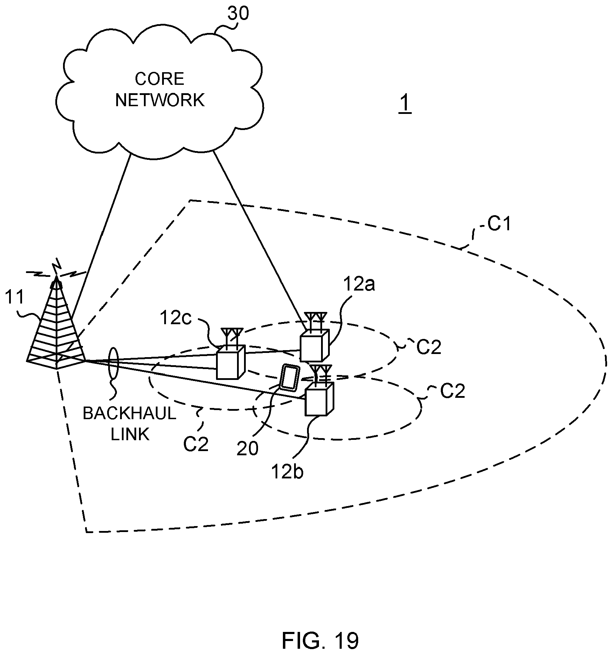

FIG. 19 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations (for example, RRHs) 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

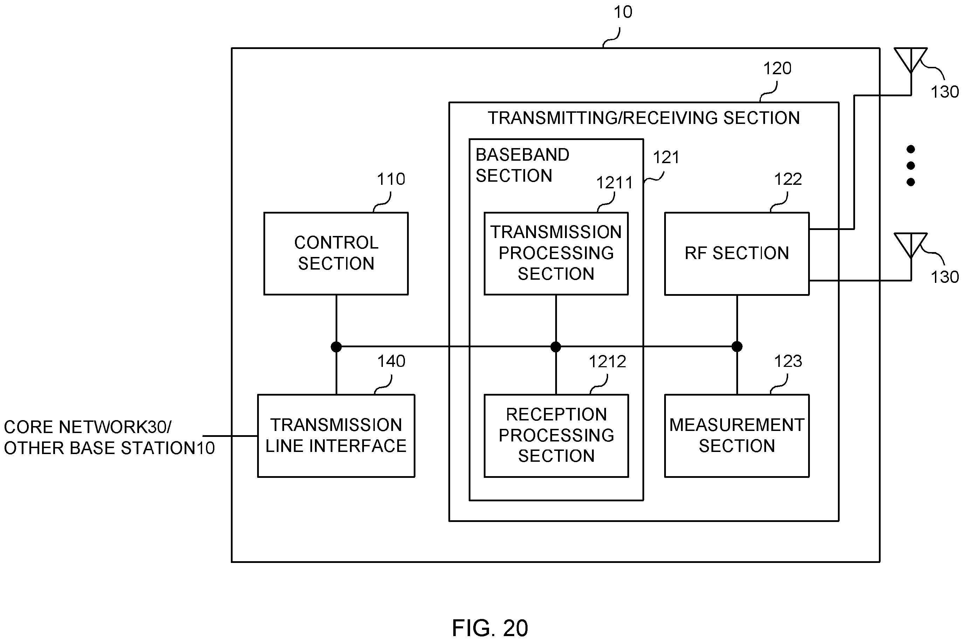

FIG. 20 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit one piece of downlink control information (DCI) for a plurality of uplink shared channels (Physical Uplink Shared Channels (PUSCHs)). The control section 110 may control receptions of the plurality of PUSCHs using a plurality of SRIs or the plurality of PUSCHs using a single SRI and transmitted based on at least one of a plurality of pieces of first information included in the DCI and each indicating a sounding reference signal resource indicator (SRI) (second embodiment).

The transmitting/receiving section 120 may transmit one piece of downlink control information (DCI) for one or more uplink shared channels (Physical Uplink Shared Channel (PUSCH)). The control section 110 may control receptions of a plurality of PUSCHs using a plurality of SRIs or a single PUSCH using a single SRI and transmitted based on at least one of a plurality of pieces of first information included in the DCI and each indicating a sounding reference signal resource indicator (SRI) (third embodiment).

### (User Terminal)

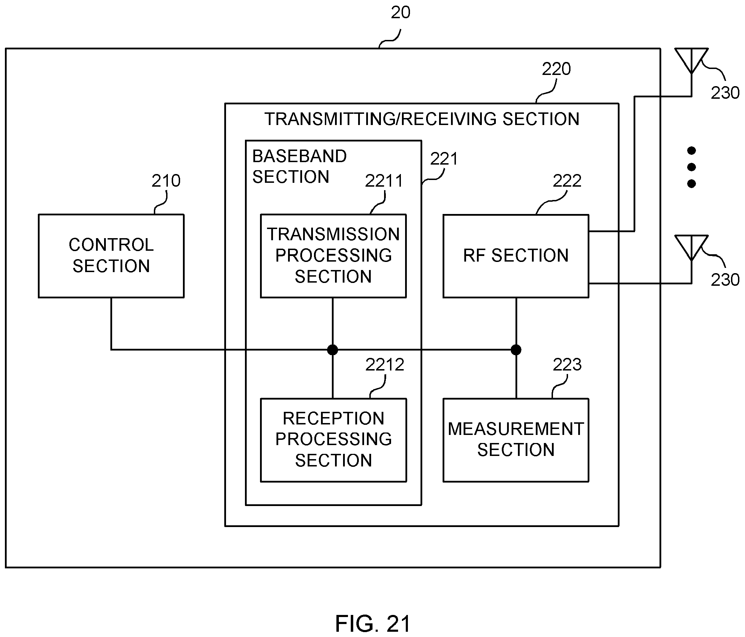

FIG. 21 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive one piece of downlink control information (DCI) for a plurality of uplink shared channels (Physical Uplink Shared Channels (PUSCHs)). The control section 210 may control, based on at least one of a plurality of pieces of first information included in the DCI and each indicating a sounding reference signal resource indicator (SRI), transmissions of the plurality of PUSCHs using the plurality of PUSCH using a plurality of SRIs or the plurality of PUSCHs using a single SRI (second embodiment).

When the plurality of pieces of first information indicate the same SRI, the control section 210 may perform control to perform the transmissions of the plurality of PUSCHs using the single SRI (second embodiment).

When at least one of the plurality of pieces of first information includes an indication indicating not applicable, the control section 210 may perform control to perform the transmissions of the plurality of PUSCHs by the single SRI (second embodiment).

Second information indicating application of a plurality of SRIs or a single SRI may be included in the DCI. The control section 210 may control whether to apply the plurality of SRIs or apply the single SRI to the plurality of PUSCHs, based on the second information (second embodiment).

The transmitting/receiving section 220 may receive one or more pieces of downlink control information (DCI) for one or more uplink shared channels (Physical Uplink Shared Channels (PUSCHs)). The control section 210 may control, based on at least one of a plurality of pieces of first information included in the DCI and each indicating a sounding reference signal resource indicator (SRI), transmissions of a plurality of PUSCHs using a plurality of SRIs or a transmission of a single PUSCH using a single SRI (third embodiment).

When the plurality of pieces of first information indicate the same SRI, the control section 210 may perform control to perform the transmission of the single PUSCH (third embodiment).

When at least one of the plurality of pieces of first information includes an indication indicating not applicable, the control section 210 may perform control to perform the transmission of the single PUSCH (third embodiment).

Second information indicating application of a plurality of SRIs or a single SRI may be included in the DCI. The control section 210 may control whether to perform the transmissions of the plurality of PUSCHs or the transmission of the single PUSCH, based on the second information (third embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

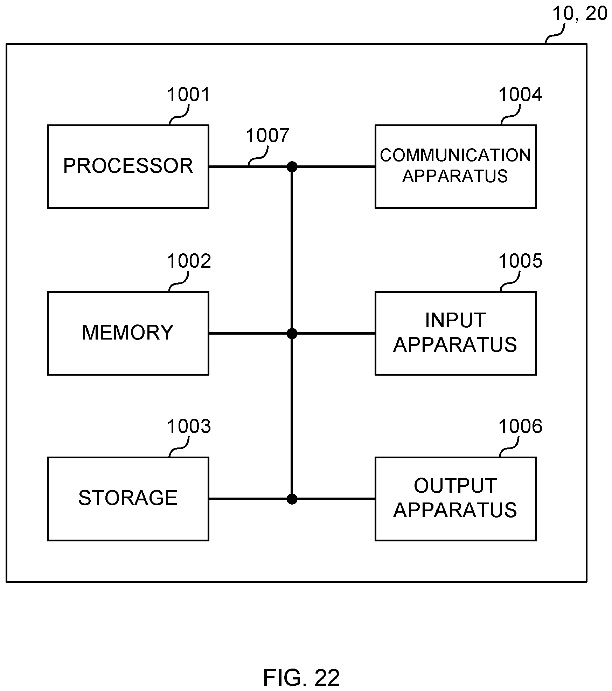

For example, a base station, a user terminal, and so on according to one embodiment of the present disclosure may function as a computer that executes the processes of the radio communication method of the present disclosure. FIG. 22 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives one piece of downlink control information (DCI) for a plurality of uplink shared channels (Physical Uplink Shared Channels (PUSCHs)); and
a control section that controls, based on at least one of a plurality of pieces of first information included in the DCI and each indicating a sounding reference signal resource indicator (SRI), transmissions of the plurality of PUSCHs using a plurality of SRIs or the plurality of PUSCHs using a single SRI.

2. The terminal according to claim 1, wherein
when the plurality of pieces of first information indicate the same SRI, the control section performs control to perform the transmissions of the plurality of PUSCHs using the single SRI.

3. The terminal according to claim 1, wherein
when at least one of the plurality of pieces of first information includes an indication indicating not applicable, the control section performs control to perform the transmissions of the plurality of PUSCHs by the single SRI.

4. The terminal according to claim 1, wherein
the DCI includes second information indicating application of a plurality of SRIs or a single SRI, and
the control section controls whether to apply the plurality of SRIs or apply the single SRI to the plurality of PUSCHs, based on the second information.

5. A radio communication method for a terminal, the radio communication method comprising:
receiving one piece of downlink control information (DCI) for a plurality of uplink shared channels (Physical Uplink Shared Channels (PUSCHs)); and
controlling, based on at least one of a plurality of pieces of first information included in the DCI and each indicating a sounding reference signal resource indicator (SRI), transmissions of the plurality of PUSCHs using a plurality of SRIs or the plurality of PUSCHs using a single SRI.

6. A base station comprising:
a transmitting section that transmits one piece of downlink control information (DCI) for a plurality of uplink shared channels (Physical Uplink Shared Channels (PUSCHs)); and
a control section that controls receptions of the plurality of PUSCHs using a plurality of SRIs or the plurality of PUSCHs using a single SRI and transmitted based on at least one of a plurality of pieces of first information included in the DCI and each indicating a sounding reference signal resource indicator (SRI).
